# EUROPÄISCHE PATENTSCHRIFT

(11) **EP 1 135 709 B1**
(45) Veröffentlichungstag und Bekanntmachung des Hinweises auf die Patenterteilung: **29.05.2002**
(21) Anmeldenummer: 99962094.1
(22) Anmeldetag: 29.11.1999
(51) Int. Cl.: G02B 26/10

(54) **VORRICHTUNG ZUM ABTASTEN EINES OBJEKTES**
DEVICE FOR SCANNING AN OBJECT
DISPOSITIF POUR EXPLORER UN OBJET

(30) Priorität: 30.11.1998 DE 19855140
(43) Veröffentlichungstag der Anmeldung: 26.09.2001
(73) Patentinhaber: Universität Hannover, 30167 Hannover (DE)
(72) Erfinder: MÜLLER, Eckart, D-90443 Nürnberg (DE); KRUSE, Ulf, D-30449 Hannover (DE)
(74) Vertreter: Gerstein, Hans Joachim, Dipl.-Ing.
(86) Internationale Anmeldenummer: DE9903774
(87) Internationale Veröffentlichungsnummer: WO0033120

(56) Entgegenhaltungen:
- EP-A- 0 005 244
- EP-A- 0 178 037
- EP-A- 0 219 620
- EP-A- 0 226 428
- EP-A- 0 575 988
- EP-A- 0 814 358
- WO-A-89/05512
- WO-A-96/11420
- DE-U- 29 712 018
- US-A- 5 071 239

## Beschreibung

Die Erfindung betrifft eine Vorrichtung zum Abtasten eines Objektes mit einem Abtaststrahl, der in eine rotierende Ablenkeinheit geleitet und mit einer beweglich angeordneten Umlenkeinheit in einem steuerbaren Umlenkwinkel auf das Objekt umgelenkt wird.

Entsprechende auf dem optischen Prinzip basierende Vorrichtungen sind insbesondere als Laser-Scanner bekannt, und werden z.B. für Laser-Radar-Anwendungen eingesetzt. Hierbei wird ein Objekt mit einer kohärenten Lichtquelle, d.h. einem Laserstrahl, abgetastet und der Abstand zu den abgetasteten Meßpunkten durch eine laser-optische Entfernungsmessung ermittelt. Dadurch ist es möglich, ein dreidimensionales Abbild der abgetasteten Fläche des Meßobjektes zu erstellen.

Entsprechende Ablenkeinheiten werden auch für Laserdrucker oder für das Beschreiben, Prüfen und Abspielen von CD-Aufzeichnungsplatten (Compact-Disc) verwendet.

In der EP 575 988 A1 ist ein Laserscanner für Laserdrucker und in der EP 178 037 A2 ein entsprechender Laserscanner zur Qualitätskontrolle von Halbleiter-Wafern offenbart, bei dem ein Laserstrahl mit einem rotierenden Polygonspiegel auf einen feststehenden länglichen Umlenkspiegel abgelenkt und auf die Druckertrommel geleitet wird. Bei einer Rotation des Polygonspiegels überstreicht der Laserstrahl die Längsachse des Umlenkspiegels und es erfolgt eine eindimensionale Abtastung.

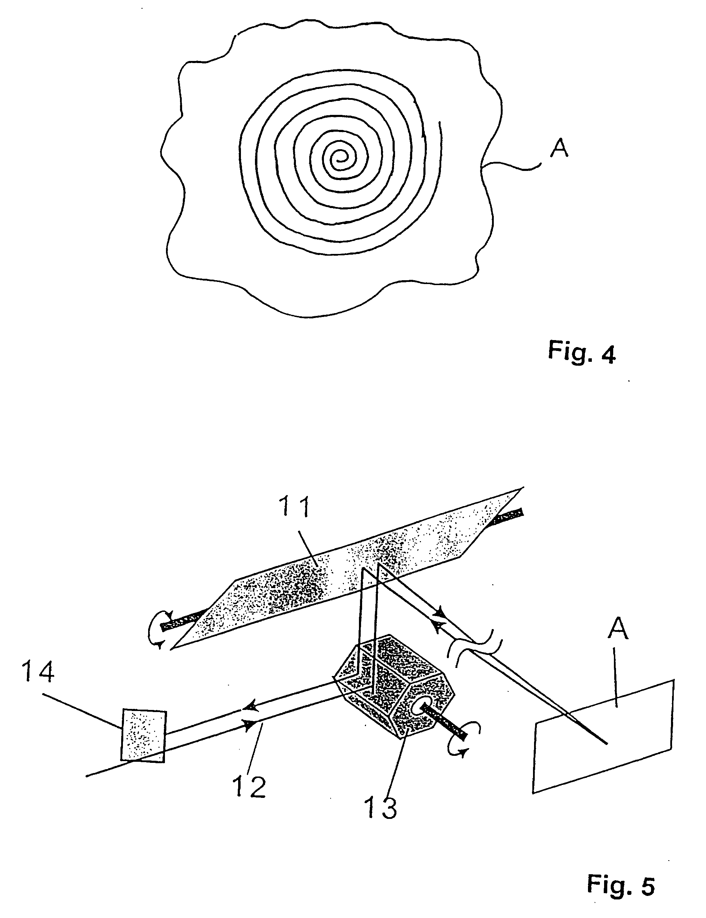

Zur Abtastung einer zweidimensionalen Fläche sind sogenannte Galvano-Scanner bekannt, bei denen der oben bezeichnete Umlenkspiegel kippbar ist. Diese herkömmliche Ausführungsform ist in der Figur 4 skizziert. Durch eine schnelle Rotation des Polygonspiegels und eine langsame Drehung bzw. Kippbewegung des Umlenkspiegels wird das Objekt in kartesischen Koordinaten zweidimensional jeweils zeilenweise abgetastet.

Bei den vorgenannten Laser-Scannern muß der Umlenkspiegel aufgrund der Ablenkung des Laserstrahls durch den Polygonspiegel relativ breit sein. Da die Antriebsmotoren für beide Spiegel in den Laser-Scanner integriert werden müssen, sind die Bauformen ziemlich groß. Zudem ist die aufeinander abgestimmte Steuerung der Spiegel aufwendig.

In der EP 219 620 A2 ist eine schnelle Scaneinrichtung für Höchstablenkgeschwindigkeiten beschrieben, bei der ein Laserstrahl mit zwei symmetrischen Zylinderspiegeln abgelenkt wird, die in eine Rotation versetzt werden. Dabei stehen die Spiegelschichten in einem kleinen Winkel zur Rotationsachse, so daß der luftgelagerte und durch einen Luftstrom in Rotationsbewegung versetzte Zylinderspiegel torkelt und den Laserstrahl auf eine kreisförmige Bahn ablenkt. Der Laserstrahl wird auf einen entsprechenden zweiten Zylinderspiegel geleitet, so daß ein räumliches Muster in Abhängigkeit von den jeweiligen Umdrehungsgeschwindigkeiten und Spiegeldurchmessern entsteht.

In der WO 96/11420 ist ein Laserscanner zur zweidimensionalen Raumabtastung beschrieben, wobei ein Laserstrahl mit zwei relativ zueinander stehenden Spiegeln abgelenkt wird. Die Ablenkeinheiten werden mit einem Computersystem gesteuert. Dies erfordert einen großen Steuerungsaufwand. Zudem ist der Platzbedarf für die beiden Ablenkeinheiten und der Fertigungsaufwand relativ groß.

Zum Abtasten von Barcodes ist in der WO 89/05512 ein Rotationsscanner beschrieben, wobei ein Laserstrahl in einen geneigten Spiegel geleitet wird, der in einem rotierenden zylinderförmigen Gehäuse angeordnet ist. Der Laserstrahl tritt aus einer Öffnung auf dem Umfang des Gehäuses heraus und fällt auf eine Anzahl geneigter Umlenkspiegel, die eine Pyramide mit vieleckiger Grundfläche bilden. Die starr angeordneten Umlenkspiegel lenken den Laserstrahl auf das Objekt, wobei die Neigung und die Anzahl der Umlenkspiegel das Abtastmuster bestimmen. Die Abtastfläche ist hierbei jedoch nachteilig auch einen schmalen Bereich für z.B. einen Barcode begrenzt und es ist nicht möglich, eine vollständige Fläche systematisch abzutasten.

In der DE-OS 37 95 042 A1 ist eine optische Abtastvorrichtung beschrieben, bei der Ablenkspiegel auf einem drehbaren Träger angeordnet sind. Die Ablenkspiegel sind jeweils in demselben nicht-rechtwinkligen Winkel zu einem Radius des Trägers angeordnet, so daß ein Abtaststrahl in einem durch die Rotation veränderten Winkel auf einen Kippspiegel abzulenken. Der Kippspiegel ist an einem Schrittmotor beweglich befestigt. Der Kippwinkel des Kippspiegels wird diskret verändert, sobald eine horizontale Bahn durch Rotation des Trägers abgetastet wurde. Der Winkel der Abllenkspiegel, die Rotationsgeschwindigkeit des Trägers und der Kippwinkel des Kippspiegels muß sehr präzise aufeinander synchronisiert werden, um eine Fläche kontrolliert abtasten zu können. Zudem ist die Baugröße der Abtastvorrichtung relativ groß, insbesondere weil der Kippspiegel mit dem Schrittmotor aktiv betätigt wird.

In dem US-Patent 5,071,239 ist ein Abtastteleskop beschrieben, bei dem ein Abtaststrahl auf einen Ablenkspiegel geleitet und von einer Umlenkeinheit auf eine Linse gerichtet. Die Umlenkeinheit hat eine gekrümmte Oberfläche, so daß der umgelenkte Laserstrahl von der Normalen abgelenkt wird. Die Umlenkeinheit ist fest angeordnet.

Es ist daher möglich, mit der Anordnung eine Kreisbahn abzutasten. Die Abtastgeschwindigkeit ist hierbei abhängig von der Rotationsgeschwindigkeit des Ablenkspiegels. Der Radius der abgetasteten Kreisbahn kann durch horizontale Verschiebung des Ablenkspiegels 11 gesteuert werden. Dies erfordert nachteilig eine aufwendige abgestimmte Steuerung und einen zusätzlichen Aktor.

Aufgabe der vorliegenden Erfindung war es daher, eine Vorrichtung zum Abtasten einer Oberfläche mit einem Abtaststrahl zu schaffen, die eine 2-dimensionale Abtastbahn mit nur einer Antriebseinheit ermöglicht. Die Vorrichtung sollte eine geringe Baugröße aufweisen, wenig Steuerungsaufwand erfordern und die Fläche eines Objektes vollständig erfassen und abtasten können.

Die Aufgabe wird durch die Vorrichtung mit den Merkmalen des Patentanspruchs 1 gelöst. Vorteilhafte Ausgestaltungen sind in den Unteransprüchen beschrieben.

Die Umlenkeinheit ist so angeordnet, daß sich der Umlenkwinkel der Umlenkeinheit fliehkraftabhängig und somit in Abhängigkeit von der Drehzahl der Ablenkeinheit einstellt. Damit wird die Abtastbahn durch die Rotationsgeschwindigkeit des Antriebes für die Ablenkeinheit festgelegt und es kann vorteilhafterweise ein weiterer Antrieb für die Umlenkeinheit bzw. eine zusätzliche Steuerung entfallen. Die Vorrichtung kann somit in kleinen Baugruppen integriert werden. Zudem ist der Steuerungs und Komponentenaufwand minimal.

Die Ablenkeinheit ist vorteilhafterweise in einem um eine Gehäusedrehachse rotierbaren Gehäuse angeordnet. Die Umlenkeinheit ist an dem Umfang des Gehäuses befestigt, so daß drehzahlabhängige Fliehkräfte auf die Umlenkeinheit wirken und diese verbiegen. Die Ablenkeinheit und die Umlenkeinheit sind hierbei so aufeinander ausgerichtet, daß der Abtaststrahl von der Ablenkeinheit auf die Umlenkeinheit geleitet und von dieser in einem drehzahlabhängigen Winkel auf das Objekt gelenkt wird.

Die Umlenkeinheit ist hierzu vorteilhafterweise an dem einen Ende eines Federarmes befestigt. Das andere Ende des Federarmes ist an das Gehäuse angebracht. Die Materialeigenschaften des Federarmes bestimmen dann das Maß der Ablenkung im Verhältnis zur auf die Umlenkeinheit wirkenden drehzahlabhängigen Fliehkraft.

Das Gehäuse hat vorzugsweise eine Ausnehmung zur Aufnahme des Federarmes, so daß der Federarm in das Gehäuse integriert ist und die Gehäuseoberfläche bündig abschließt.

Der Federarm kann zum Beispiel aus Kunststoff oder Metall sein. Vorteilhafterweise ist der Federarm eine Blattfeder. Die Biegeeigenschaften der Blattfeder bestimmen das drehzahlabhängige Ablenkverhalten.

Zum Ausgleichen der Unwucht des Gehäuses, die u.a. durch den einen Federarm verursacht wird, ist mindestens ein Gegengewicht auf dem Umfang des Gehäuses vorgesehen.

Als Gegengewichte sind vorzugsweise zwei weitere Federarme vorgesehen, die im Winkel von jeweils 120° in Bezug auf den Federarm auf dem Umfang des Gehäuses angebracht sind. An den freien Enden der weiteren Federarme sind jeweils zwei Gewichte vorgesehen.

Das Gehäuse ist vorteilhafterweise ein Hohlzylinder, durch den der Abtaststrahl geleitet werden kann. Bei der Verwendung eines optischen Meßstrahls, z.B. eines Laserstrahls, ist es vorteilhaft, wenn die Ablenkeinheit ein in dem Hohlzylinder angeordnetes Prisma und die Umlenkeinheit ein Spiegel ist.

Die Erfindung wird nachfolgend anhand der beigefügten Zeichungen näher erläutert. Es zeigen:
- Figur 1:: Längsschnitt des Laser-Scanners gemäß der Erfindung mit einer Blattfeder-Spiegel-Umlenkeinheit bei Stillstand des Gehäuses;
- Figur 2:: Längsschnitt des Laser-Scanners gemäß der Erfindung mit einer Blattfeder-Spiegel-Umlenkeinheit bei geringer Drehzahl des Gehäuses;
- Figur 3:: Längsschnitt des Laser-Scanners gemäß der Erfindung mit einer Blattfeder-Spiegel-Umlenkeinheit bei höherer Drehzahl des Gehäuses;
- Figur 4:: Abtastbahn des Meßstrahls auf dem Meßobjekt bei kontinuierlicher Steigerung der Drehzahl;
- Figur 5:: Prinzipskizze eines herkömmlichen Galvanometer-Scanners.

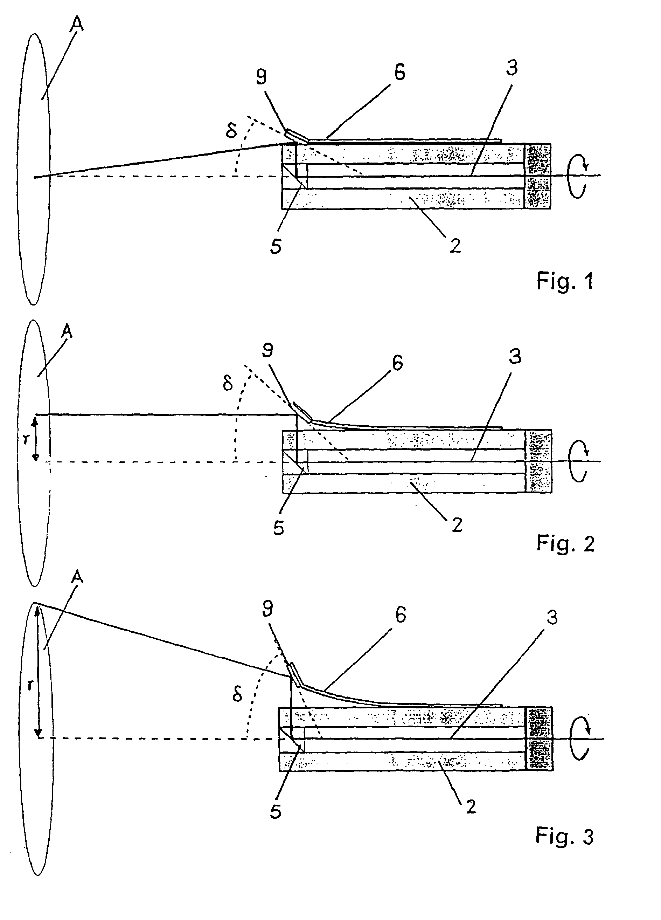

Die Erfindung wird anhand eines Laser-Scanners 1 mit einer Blattfeder-Spiegel-Umlenkeinheit beschrieben. Aus dem Längsschnitt in der Figur 1 ist der Laser-Scanner 1 bei einem stillstehenden und in der Figur 2 bei einer geringen Drehzahl des Gehäuses 2 skizziert. Es ist ein Gehäuse 2 in Form eines Hohlzylinders vorgesehen, das rotierbar angeordnet ist. Hierzu kann das Gehäuse 2 mit einer nicht dargestellten Antriebseinheit angetrieben werden. Die Drehzahl des Gehäuses 2 ist mit hinreichend bekannten Mitteln steuerbar. Ein Abtaststrahl 3, z.B. ein Laserstrahl, wird so in das erste Ende des Hohlzylinders geleitet, daß er sich zentral über die Längsachse des Hohlzylinders erstreckt. Am zweiten Ende 4 des zylinderförmigen Gehäuses 2 ist eine Ablenkeinheit 5 in Form eines Prismas angeordnet, um den Abtaststrahl 3 radial nach außen auf eine Umlenkeinheit 6 zu lenken. Die Umlenkeinheit 6 hat einen Spiegel 9.

Die Umlenkeinheit 6 ist an dem ersten Ende 7 eines Federarmes 8 angeordnet, der sich entlang der Längsachse des zylinderförmigen Gehäuses 2 auf seinem Umfang erstreckt. Der Federarm 8 ist an seinem zweiten Ende 9 an das Gehäuse 2 z.B. durch Kleben, Schrauben oder Nieten angebracht. Das Gehäuse 2 kann hierzu eine Ausnehmung haben, in die der Federarm 8 bündig eingebracht wird, so daß die Oberfläche des zylinderförmigen Gehäuses 2 glatt abschließt.

Der Abtaststrahl 3 wird von der Umlenkeinheit 6 auf ein Objekt gelenkt. Mit Hilfe einer hinreichend bekannten Meßaufnahme- und Meßauswerteeinheit wird die Reflexion des Abtaststrahls 3 ausgewertet und eine laser-optische Entfernungsmessung durchgeführt.

Auf die Umlenkeinheit 6 wirken durch die Rotation des zylinderförmigen Gehäuses 2 Fliehkräfte, die von der Drehzahl abhängig sind. Damit kann der Ablenkwinkel 8 des Abtaststrahls 3 auf das Objekt drehzahlabhängig gesteuert werden. Entsprechend ist die Auslenkung r des Abtaststrahls 3 bzw. der Ablenkwinkel 8 der Umlenkeinheit 6 bzw. des Umlenkspiegels bei einer höheren Drehzahl größer als bei einer geringen Drehzahl. Diese Eigenschaft wird in der Figur 3 anhand des Laser-Scanners 1 bei hoher Drehzahl deutlich, wenn diese Skizze mit dem in der Figur 2 bei niedriger Drehzahl dargestellten Laser-Scanner verglichen wird.

Zum Abtasten einer vollständigen Fläche A eines Objektes wird die Drehzahl kontinuierlich gesteigert oder gesenkt. Dann nimmt durch die kontinuierliche Fliehkraftänderung auch die Auslenkung der Umlenkeinheit 6 ebenfalls kontinuierlich ab bzw. zu und der Abtaststrahl 3 beschreibt auf dem Objekt die in der Figur 4 skizzierte spiralförmige Abtastbahn. Zum Auswerten der Reflexionen des Abtaststrahls 3 für das Abtasten des Objektes müssen die momentanen Abtastpunkte bekannt sein. Diese lassen sich bei Kenntnis der Federeigenschaften direkt aus der Drehzahl und dem Drehwinkel ω des zylinderförmigen Gehäuses 2 berechnen. Der Drehwinkel ω kann in hinreichend bekannter Weise z.B. mit einer Winkelmeßeinrichtung oder einer Zeitmessung in Abhängigkeit von einem Null-Positionssignal bestimmt werden. Hierzu kann das Gehäuse 2 eine entsprechende Markierung einer Null-Position haben.

In der Figur 5 ist ein herkömmlicher Galvanometer-Scanner 10 dargestellt. Im Unterschied zu der vorgeschlagenen Vorrichtung ist hierbei ein länglicher Kippspiegel 11 mit einer zusätzlichen gesteuerten Antriebseinheit zum Bewegen des Kippspiegels 11 vorgesehen. Ein Laserstrahl 12 wird auf einen rotierenden Polygonspiegel 13 geleitet und von diesem auf den Kippspiegel 11 gelenkt. Der Ablenkwinkel des Laserstrahls 12 ist dabei von der Winkelposition des Polygonspiegels 13 abhängig. In der Zeit, in der der Laserstrahl 12 von einer der Spiegelflächen des rotierenden Polygonspiegels 13 abgelenkt wird, durchläuft dieser eine gesamte Zeile des Kippspiegels 11 und damit auch der Abtastfläche A. Der Kippspiegel 11 wird sehr langsam, relativ zur Rotation des Polygonspiegels bewegt und es erfolgt eine Zeilen-Spalten-Abtastung der Abtastfläche A. Der Laserstrahl 12 wird von der Abtastfläche zurückreflektiert und von einer Fotodiode 14 erfaßt. Die Tiefe der Oberfläche des entsprechenden Abtastpunktes wird durch eine Zeitmessung nach dem bekannten laser-optischen Prinzip ermittelt.

Eine vergleichende Betrachtung dieses skizzierten Galvano-Scanners 10 mit dem Laser-Scanner 1 mit integrierter Blattfeder-Spiegel-Umlenkeinheit, der in den Figuren 1 und 2 dargestellt ist, zeigt, daß mit der Vorrichtung mit den Merkmalen der Erfindung der Platzbedarf und der Steuerungsaufwand erheblich minimiert werden kann.

## Patentansprüche

1. Vorrichtung zum Abtasten von Objekten mit einem Abtaststrahl (3), wobei die Vorrichtung eine rotierende Ablenkeinheit (5) aufweist zur Umlenkung eines bezüglich deren Rotationsachse axial einfallenden Abtaststrahls (3) auf eine beweglich, außenaxial angeordnete Umlenkeinheit (6) zur Ablenkung des Abtaststrahls (3) in einem steuerbaren Umlenkwinkel (δ) auf das Objekt, und wobei die Umlenkeinheit (6) derart angeordnet ist, dass sich der Umlenkwinkel (8) der Umlenkeinheit (6) abhängig von der auf die Umlenkeinheit (6) wirkenden Fliehkraft und somit in Abhängigkeit von der Drehzahl der Ablenkeinheit (5) einstellt.

2. Vorrichtung nach Anspruch 1, **dadurch gekennzeichnet, daß** die Ablenkeinheit (5) in einem um eine Gehäusedrehachse rotierbaren Gehäuse (2) angeordnet ist und die Umlenkeinheit (6) auf dem Umfang des Gehäuses (2) angebracht ist.

3. Vorrichtung nach Anspruch 2, **dadurch gekennzeichnet, daß** die Umlenkeinheit (6) an einem ersten Ende (7) eines Federarmes (8) befestigt ist und das zweite Ende (9) des Federarmes (8) auf dem Umfang des Gehäuses (2) angebracht ist.

4. Vorrichtung nach Anspruch 3, **dadurch gekennzeichnet, daß** das Gehäuse (2) eine Ausnehmung zur Aufnahme des Federarmes (8) hat.

5. Vorrichtung nach Anspruch 3 oder 4, **dadurch gekennzeichnet, daß** der Federarm (8) aus Kunststoff ist.

6. Vorrichtung nach Anspruch 3 oder 4, **dadurch gekennzeichnet, daß** der Federarm (8) eine Blattfeder ist.

7. Vorrichtung nach Anspruch 3 oder 4, **dadurch gekennzeichnet, daß** der Federarm (8) aus Metall ist.

8. Vorrichtung nach einem der vorhergehenden Ansprüche, **dadurch gekennzeichnet, daß** mindestens ein Gegengewicht auf dem Umfang des Gehäuses (2) zum Ausgleichen der Unwucht vorgesehen ist.

9. Vorrichtung nach Anspruch 8, **dadurch gekennzeichnet, daß** die Gegengewichte zwei Ausgleichsfederarme sind, die im Winkel von jeweils 120° in Bezug auf den Federarm (8) auf den Umfang des Gehäuses angebracht sind, wobei an den freien Enden der Ausgleichsfederarme jeweils zwei Gewichte vorgesehen sind.

10. Vorrichtung nach einem der vorhergehenden Ansprüche, **dadurch gekennzeichnet, daß** das Gehäuse (2) ein Hohlzylinder ist.

11. Vorrichtung nach einem der vorhergehenden Ansprüche, **dadurch gekennzeichnet, daß** die Ablenkeinheit (5) ein Prisma ist.

12. Vorrichtung nach einem der vorhergehenden Ansprüche, **dadurch gekennzeichnet, daß** die Umlenkeinheit (6) ein Spiegel ist.

## Claims

1. Device for scanning objects with a scanning beam (3), wherein the device has a rotating deflection unit (5) for diverting a scanning beam (3) axially incident with respect to the axis of rotation of said deflection unit onto a diverting unit (6) disposed movably and off-axis for deflecting the scanning beam (3) at a controllable diversion angle (δ) onto the object, and wherein the diverting unit (6) is disposed in such a way that the diversion angle (δ) of the diverting unit (6) is set as a function of the centrifugal force acting on the diverting unit (6) and consequently as a function of the rotational speed of the deflection unit (5).

2. Device according to Claim 1, **characterized in that** the deflection unit (5) is disposed in housing (2) that is rotatable around a housing axis of rotation and the diverting unit (6) is mounted on the periphery of the housing (2).

3. Device according to Claim 2, **characterized in that** the diverting unit (6) is attached to a first end (7) of a spring arm (8) and the second end (9) of the spring arm (8) is mounted on the periphery of the housing (2).

4. Device according to Claim 3, **characterized in that** the housing (2) has a recess for receiving the spring arm (8).

5. Device according to Claim 3 or 4, **characterized in that** the spring arm (8) is made of plastic.

6. Device according to Claim 3 or 4, **characterized in that** the spring arm (8) is a leaf spring.

7. Device according to Claim 3 or 4, **characterized in that** the spring arm (8) is made of metal.

8. Device according to one of the preceding claims, **characterized in that** at least one counterweight is provided on the periphery of the housing (2) to equalize the imbalance.

9. Device according to Claim 8, **characterized in that** the counterweights are two equalizing spring arms that are mounted on the periphery of the housing at an angle in each case of 120° with respect to spring arm (8), wherein two weights are in each case provided at the unsupported ends of the equalizing spring arms.

10. Device according to one of the preceding claims, **characterized in that** the housing (2) is a hollow cylinder.

11. Device according to one of the preceding claims, **characterized in that** the deflection unit (5) is a prism.

12. Device according to one of the preceding claims, **characterized in that** the diverting unit (6) is a mirror.

## Revendications

1. Dispositif pour explorer des objets au moyen d'un rayon d'exploration (3), le dispositif comprenant une unité rotative de déviation (5) pour dévier sur une unité mobile de renvoi (6) disposée en-dehors de l'axe un rayon d'exploration (3) arrivant axialement par rapport à l'axe de rotation de l'unité de déviation, l'unité de renvoi étant destinée à dévier le rayon d'exploration (3) sur l'objet suivant un angle de renvoi (δ) pilotable, et l'unité de renvoi (6) étant agencée de façon que l'angle de renvoi (δ) de l'unité de renvoi (6) se règle en fonction des forces centrifuges agissant sur l'unité de renvoi (6) et ainsi en fonction de la vitesse de rotation de l'unité de déviation (5).

2. Dispositif selon la revendication 1, **caractérisé en ce que** l'unité de déviation (5) est agencée dans un boîtier (2) rotatif autour d'un axe de rotation du boîtier, et l'unité de renvoi (6) est rapportée sur la périphérie du boîtier (2).

3. Dispositif selon la revendication 2, **caractérisé en ce que** l'unité de renvoi (6) est fixée à une première extrémité (7) d'un bras élastique (8) et la seconde extrémité (9) du bras élastique (8) est rapportée sur la périphérie du boîtier (2).

4. Dispositif selon la revendication 3, **caractérisé en ce que** le boîtier possède un évidement pour recevoir le bras élastique (8).

5. Dispositif selon la revendication 3 ou 4, **caractérisé en ce que** le bras élastique (8) est en matière plastique.

6. Dispositif selon la revendication 3 ou 4, **caractérisé en ce que** le bras élastique (8) est une lame de ressort.

7. Dispositif selon la revendication 3 ou 4, **caractérisé en ce que** le bras élastique (8) est en métal.

8. Dispositif selon l'une des revendications précédentes, **caractérisé en ce qu'**il est prévu au moins un contre-poids sur la périphérie du boîtier (2) pour compenser le balourd.

9. Dispositif selon la revendication 8, **caractérisé en ce que** les contre-poids sont deux bras élastiques de compensation qui sont rapportés sur la périphérie du boîtier à un angle de chacun 120° par rapport au bras élastique (8), deux masselottes étant prévues aux extrémités libres des bras élastiques de compensation.

10. Dispositif selon l'une des revendications précédentes, **caractérisé en ce que** le boîtier (2) est un cylindre creux.

11. Dispositif selon l'une des revendications précédentes, **caractérisé en ce que** l'unité de déviation (5) est un prisme.

12. Dispositif selon l'une des revendications précédentes, **caractérisé en ce que** l'unité de renvoi (6) est un miroir.
